# EUROPEAN PATENT APPLICATION

(11) **EP 3 910 949 A1**
(43) Date of publication of application: **17.11.2021**
(21) Application number: 20216191.5
(22) Date of filing: 21.12.2020
(51) Int. Cl.: H04N 19/137, H04N 19/162, H04N 19/46, H04N 19/527

(54) **VIDEO PROCESSING METHOD AND APPARATUS, AND STORAGE MEDIUM**

(30) Priority: 14.05.2020 CN 202010411677
(71) Applicant: Beijing Xiaomi Mobile Software Co., Ltd., Beijing 100085 (CN)
(72) Inventor: ZHANG, Kai, Haidian District, Beijing 100085 (CN)
(74) Representative: Gevers Patents

(57) **Abstract**

The present disclosure provides a video processing method and apparatus. The method includes: image data for an Nth frame of image of a video to be recorded is acquired (S 11); the acquired image data for the Nth frame of image is encoded to obtain encoded data for the Nth frame of image (S 12); x frames of parameter data of a motion parameter of the electronic device that are relevant to the Nth frame of image are acquired according to a preset rule (S13); an anti-jitter processing policy for the Nth frame of image is determined according to the acquired x frames of parameter data of the motion parameter of the electronic device (S14); and the encoded data for the Nth frame of image and the anti-jitter processing policy for the Nth frame of image are stored as a video file for the Nth frame of image (S15).

## Description

### TECHNICAL FIELD

The present disclosure relates to the field of video processing, and more particularly, to a video processing method and apparatus, and a storage medium.

### BACKGROUND

In a relevant art, images are processed according to jitter conditions during a video recording process, thereby reducing the jitter of videos. For anti-jitter processing of image data, a gyroscope sensor on an electronic device is generally used to acquire gyroscope data (Gyro data) of the electronic device in the video recording process to process image data for each frame of image of the video, thereby achieving the anti-jitter purpose. In order to perform the anti-jitter processing on the video, image data of images included in a period of video and corresponding Gyro data need to be cached, which occupies a large amount of memory. Moreover, there is a need for the anti-jitter processing on frame image data of the video during the video recording process, which increases the power consumption and heating of the electronic device. Therefore, to provide a video processing method with small memory occupation and small power consumption is a problem to be solved urgently.

### SUMMARY

In order to overcome the problems in the related art, the present disclosure provides a video processing method and apparatus, and a storage medium.

According to a first aspect of embodiments of the present disclosure, a video processing method is provided, which may be applied to an electronic device in a video recording process, and may include: image data for an Nth frame of image of a video to be recorded is acquired, the N being a positive integer greater than or equal to 1; the acquired image data for the Nth frame of image is encoded to obtain encoded data for the Nth frame of image; x frames of parameter data of a motion parameter of the electronic device that are relevant to the Nth frame of image are acquired according to a preset rule, the x being a positive integer greater than or equal to 1; an anti-jitter processing policy for the Nth frame of image is determined according to the acquired x frames of parameter data of the motion parameter of the electronic device; and the encoded data for the Nth frame of image and the anti-jitter processing policy for the Nth frame of image are stored as a video file for the Nth frame of image.

The operation that the x frames of parameter data of the motion parameter of the electronic device that are relevant to the Nth frame of image may be acquired according to either of following manners: in a first manner, nth to (n+X-1)th frames of parameter data of the motion parameter of the electronic device that are corresponding to Nth to (N+X-1) frames of images are continuously acquired, the X being a positive integer greater than or equal to 1; and in a second manner, according to an equal time interval from the Nth frame, the x frames of parameter data of the motion parameter of the electronic device that are corresponding to X frames of images are backwardly acquired, the X being a positive integer greater than or equal to 1.

The parameter data of the motion relevant parameter of the electronic device may include at least one of: parameter data of a motion direction parameter, parameter data of a motion velocity parameter, or parameter data of a motion manner parameter.

The operation that the anti-jitter processing policy for the Nth frame of image is determined according to the acquired x frames of parameter data of the motion parameter of the electronic device may include: anti-jitter parameter data for the Nth frame of image is determined according to the acquired x frames of parameter data of the motion parameter of the electronic device.

According to a second aspect of embodiments of the present disclosure, a video processing method is provided, which may be applied to an electronic device. The processing method may be applied to a video playing process, and may include: a video file for an Nth frame of image is acquired, the N being a positive integer greater than or equal to 1; encoded data for the Nth frame of image is acquired from the video file for the Nth frame of image; the encoded data for the Nth frame of image is decoded to obtain image data for the Nth frame of image; an anti-jitter processing policy for the Nth frame of image is acquired from the video file for the Nth frame of image; and anti-jitter processing is performed on the Nth frame of image according to the anti-jitter processing policy for the Nth frame of image to obtain an Nth frame of image after the anti-jitter processing.

The operation that the anti-jitter processing policy for the Nth frame of image is acquired from the video file for the Nth frame of image may include: anti-jitter parameter data for the Nth frame of image is acquired from the video file for the Nth frame of image. The operation that the anti-jitter processing is performed on the Nth frame of image according to the anti-jitter processing policy for the Nth frame of image may include: the anti-jitter processing is performed on the Nth frame of image according to the anti-jitter parameter data for the Nth frame of image.

According to a third aspect of embodiments of the present disclosure, a video processing apparatus is provided, which may be applied to a video recording process, and may include: a first acquisition module, configured to acquire image data for an Nth frame of image of a video to be recorded, the N being a positive integer greater than or equal to 1; an encoding module, configured to encode the acquired image data for the Nth frame of image to obtain encoded data for the Nth frame of image; a second acquisition module, configured to acquire, according to a preset rule, x frames of parameter data of a motion parameter of an electronic device that are relevant to the Nth frame of image, the x being a positive integer greater than or equal to 1; a determination module, configured to determine an anti-jitter processing policy for the Nth frame of image according to the acquired x frames of parameter data of the motion parameter of the electronic device; and a storage module, configured to store the encoded data for the Nth frame of image and the anti-jitter processing policy for the Nth frame of image as a video file for the Nth frame of image.

The second acquisition module may be configured to acquire the x frames of parameter data of the motion parameter of the electronic device that are relevant to the Nth frame of image according to either of following manners: in a first manner, nth to (n+X-1)th frames of parameter data of the motion parameter of the electronic device that are corresponding to Nth to (N+X-1) frames of images are continuously acquired, the X being a positive integer greater than or equal to 1; and in a second manner, according to an equal time interval from the Nth frame, the x frames of parameter data of the motion parameter of the electronic device that are corresponding to X frames of images are backwardly acquired, the X being a positive integer greater than or equal to 1.

The parameter data of the motion relevant parameter of the electronic device may include at least one of: parameter data of a motion direction parameter, parameter data of a motion velocity parameter, or parameter data of a motion manner parameter.

The determination module may be configured to determine anti-jitter parameter data for the Nth frame of image according to the acquired x frames of parameter data of the motion parameter of the electronic device.

According to a fourth aspect of embodiments of the present disclosure, a video processing apparatus is provided, which may be applied to a video playing process, and may include: a third acquisition module, configured to acquire a video file for an Nth frame of image, the N being a positive integer greater than or equal to 1; a fourth acquisition module, configured to acquire encoded data for the Nth frame of image from the video file for the Nth frame of image; a decoding module, configured to decode the encoded data for the Nth frame of image to obtain image data for the Nth frame of image; the fourth acquisition module being configured to acquire an anti-jitter processing policy for the Nth frame of image from the video file for the Nth frame of image; and an anti-jitter processing module, configured to perform anti-jitter processing on the Nth frame of image according to the anti-jitter processing policy for the Nth frame of image to obtain an Nth frame of image after the anti-jitter processing.

The fourth acquisition module may be configured to acquire anti-jitter parameter data for the Nth frame of image from the video file for the Nth frame of image; and the anti-jitter processing module may be configured to perform the anti-jitter processing on the Nth frame of image according to the anti-jitter parameter data for the Nth frame of image.

According to a fifth aspect of embodiments of the present disclosure, a video processing apparatus is provided, which may include: a processor; and a memory configured to store instructions executable by the processor. The processor may be configured to: acquire image data for an Nth frame of image of a video to be recorded, the N being a positive integer greater than or equal to 1; encode the acquired image data for the Nth frame of image to obtain encoded data for the Nth frame of image; acquire, according to a preset rule, x frames of parameter data of a motion parameter of an electronic device that are relevant to the Nth frame of image, the x being a positive integer greater than or equal to 1; determine an anti-jitter processing policy for the Nth frame of image according to the acquired x frames of parameter data of the motion parameter of the electronic device; and store the encoded data for the Nth frame of image and the anti-jitter processing policy for the Nth frame of image as a video file for the Nth frame of image.

According to a sixth aspect of embodiments of the present disclosure, a video processing apparatus is provided, which may include: a processor; and a memory configured to store instructions executable by the processor.The processor may be configured to: acquire a video file for an Nth frame of image, the N being a positive integer greater than or equal to 1; acquire encoded data for the Nth frame of image from the video file for the Nth frame of image; decode the encoded data for the Nth frame of image to obtain image data for the Nth frame of image; acquire an anti-jitter processing policy for the Nth frame of image from the video file for the Nth frame of image; and perform anti-jitter processing on the Nth frame of image according to the anti-jitter processing policy for the Nth frame of image to obtain an Nth frame of image after the anti-jitter processing.

According to a seventh aspect of embodiments of the present disclosure, a non-transitory computer-readable storage medium is provided; and instructions in the storage medium are executed by a processor of a mobile terminal, to cause the mobile terminal to perform a video processing method, which may include: image data for an Nth frame of image of a video to be recorded is acquired, the N being a positive integer greater than or equal to 1; the acquired image data for the Nth frame of image is encoded to obtain encoded data for the Nth frame of image; x frames of parameter data of a motion parameter of an electronic device that are relevant to the Nth frame of image are acquired according to a preset rule, the x being a positive integer greater than or equal to 1; an anti-jitter processing policy for the Nth frame of image is determined according to the acquired x frames of parameter data of the motion parameter of the electronic device; and the encoded data for the Nth frame of image and the anti-jitter processing policy for the Nth frame of image are stored as a video file for the Nth frame of image.

According to an eighth aspect of embodiments of the present disclosure, a non-transitory computer-readable storage medium is provided; and instructions in the storage medium are executed by a processor of a mobile terminal, to cause the mobile terminal to perform a video processing method, which may include: a video file for an Nth frame of image is acquired, the N being a positive integer greater than or equal to 1; encoded data for the Nth frame of image is acquired from the video file for the Nth frame of image; the encoded data for the Nth frame of image is decoded to obtain image data for the Nth frame of image; an anti-jitter processing policy for the Nth frame of image is acquired from the video file for the Nth frame of image; and anti-jitter processing is performed on the Nth frame of image according to the anti-jitter processing policy for the Nth frame of image to obtain an Nth frame of image after the anti-jitter processing.

The technical solutions provided by the embodiments of the present disclosure may have the following beneficial effects: in the video processing method provided by the present disclosure, only the parameter data of the motion parameter of the electronic device for correspondingly performing the anti-jitter processing on each frame of image may be cached in the video recording stage, and the corresponding number of image data may unnecessarily be cached, thereby reducing the memory occupation of the electronic device. Moreover, according to the video processing method provided by the present disclosure, the anti-jitter processing is unnecessarily performed on the video to be recorded, such that the power consumption of the electronic device in the video recording process is reduced, and the heating state of electronic product is reduced.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is an exemplary diagram showing a video processing method in a related art.
FIG. 2 is a flow chart showing a video processing method according to an exemplary embodiment.
FIG. 3 is a method for acquiring x frames of parameter data of a motion parameter of an electronic device that are relevant to an Nth frame according to a preset rule at S13 in FIG. 2.
FIG. 4 is an example diagram showing a video processing method according to an exemplary embodiment.
FIG. 5 is a flow chart showing a method for determining an anti-jitter processing policy for an Nth frame of image according to acquired x frames of parameter data of a motion parameter of an electronic device at S14 in FIG. 1.
FIG. 6 is a flow chart showing a video processing method according to an exemplary embodiment.
FIG. 7 is a flow chart showing a method for acquiring an anti-jitter processing policy for an Nth frame of image from a video file for the Nth frame of image at S24 in FIG. 6, and a flow chart showing a method for performing anti-jitter processing on the Nth frame of image according to the anti-jitter processing policy for the Nth frame of image at S25.
FIG. 8 is an example diagram showing a video processing method according to an exemplary embodiment. The exemplary diagram illustrated in FIG. 8 is a video processing method in a video playing process.
FIG. 9 is a block diagram of a video processing apparatus according to an exemplary embodiment.
FIG. 10 is a block diagram of a video processing apparatus according to an exemplary embodiment.
FIG. 11 is a block diagram of a video processing apparatus according to an exemplary embodiment (a general structure of a mobile terminal).

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

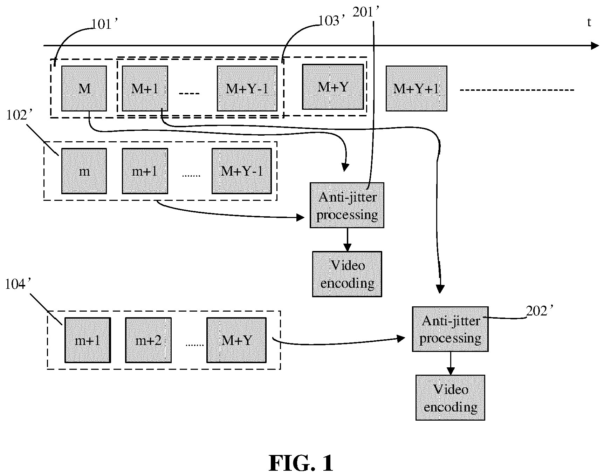

The present disclosure relates to a video processing method. In a relevant processing method, anti-jitter processing is performed on a video in a video recording stage, as illustrated in FIG. 1. FIG. 1 is an example diagram showing a video processing method in a related art. In a video anti-jitter processing manner illustrated in FIG. 1, the anti-jitter processing on an Mth frame of image of the video is used as the example for description, t denotes time, and each frame of image in a video to be recorded is acquired according to a time sequence. In order to perform the anti-jitter processing on the Mth frame of image of the video, it is necessary to continuously receive image data 101' for Y frames of images, such as image data for the Mth frame of image, image data for an (M+1)th frame of image, ..., till image data for an (M+Y-1)th frame of image, and acquire Gyro data 102' corresponding to the continuous Y frames of images, such as Gyro data corresponding to an mth frame of image, Gyro data corresponding to an (m+1)th frame of image, ..., till Gyro data corresponding to an (m+Y-1)th frame of image. The anti-jitter processing 201' is performed on the Mth frame of image according to Y frames of Gyro data 102' corresponding to the image data for the continuous Y frames of images. After the anti-jitter processing, the image data for the Mth frame of image is encoded. Then, the anti-jitter processing is performed on the image data for the (M+1)th frame of image, image data 103' for the Y frames of images, such as image data for the (M+1)th frame of image, image data for an (M+2)th frame of image, ..., till image data for an (M+Y)th frame of image may continuously be received, and Y frames of Gyro data 104' corresponding to the continuous Y frames of images, such as Gyro data corresponding to the (m+1)th frame of image, Gyro data corresponding to the (m+2)th frame of image, ..., till Gyro data corresponding to the (m+Y)th frame of image are acquired. The anti-jitter processing is performed on the (M+1)th frame of image according to the Gyro data 104' corresponding to the continuous Y frames of images. After the anti-jitter processing, the image data for the (M+1)th frame of image is encoded, and so on, thereby completing the anti-jitter processing on the recorded video. According to the above manner, to perform the anti-jitter processing on a video book, the image data for the Y frames of images of the video to be recorded and the corresponding Y frames of Gyro data are at least stored, such that the required memory is large. Furthermore, since the anti-jitter processing is completed in the video recording process, the power consumption of the electronic device is increased, and the electronic product is prone to heating.

According to a video processing method provided by the present disclosure, acquired image data for each frame of image of a video to be recorded may directly be encoded to form encoded data for each frame of image, parameter data of a motion parameter of an electronic device for performing the anti-jitter processing on each frame of image may be acquired, and an anti-jitter processing policy for each frame of image is determined according to the acquired parameter data of the motion parameter of the electronic device for performing the anti-jitter processing on each frame of image. In a video recording stage, the encoded data for each frame of image of the video to be recorded and the corresponding anti-jitter processing policy are stored as the corresponding frames of video files. In the video processing method provided by the present disclosure, only the parameter data of the motion parameter of the electronic device for correspondingly performing the anti-jitter processing on each frame of image may be cached in the video recording stage, and the corresponding number of image data may unnecessarily be cached, thereby reducing the memory occupation of the electronic device. Moreover, according to the video processing method provided by the present disclosure, the anti-jitter processing is unnecessarily performed on the video to be recorded, such that the power consumption of the electronic device in the video recording process is reduced, and the heating state of the electronic product is reduced.

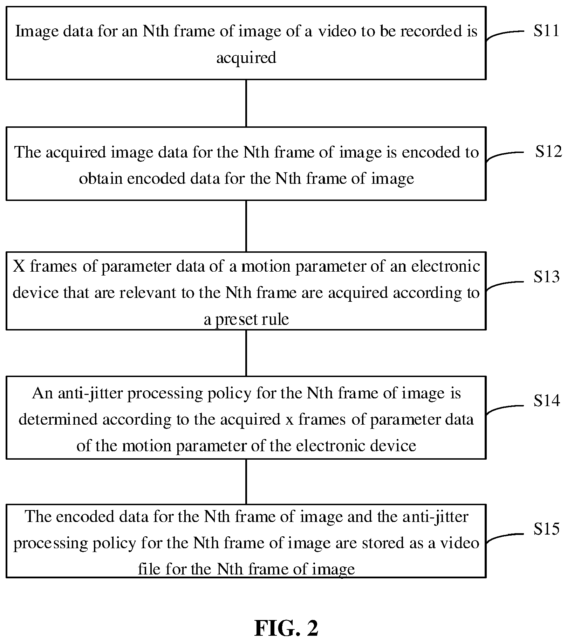

An embodiment of the present disclosure provides a video processing method. The video processing method is applied to an electronic device. FIG. 2 is a flow chart showing a video processing method according to an exemplary embodiment. As illustrated in FIG. 2, the processing method is applied to a video recording process. The video processing method may include the following operations.

At S11, image data for an Nth frame of image of a video to be recorded is acquired, and the N is a positive integer greater than or equal to 1.

At S 12, the acquired image data for the Nth frame of image is encoded to obtain encoded data for the Nth frame of image.

At S 13, x frames of parameter data of a motion parameter of an electronic device that are relevant to the Nth frame are acquired according to a preset rule, and the x is a positive integer greater than or equal to 1.

At S 14, an anti-jitter processing policy for the Nth frame of image is determined according to the acquired x frames of parameter data of the motion parameter of the electronic device.

At S15, the encoded data for the Nth frame of image and the anti-jitter processing policy for the Nth frame of image are stored as a video file for the Nth frame of image.

The method is applied to the electronic device, such as a mobile phone, a portable android device (PAD), a tablet computer, and the like. When recording the video, the electronic device acquires the image data for the Nth frame of image, and encodes the image data for the Nth frame of image to obtain the encoded data for the Nth frame of image. The x frames of parameter data of the motion parameter of the electronic device that are relevant to the Nth frame are acquired according to the preset rule; the anti-jitter processing policy for the Nth frame of image is determined according to the acquired x frames of parameter data of the motion parameter of the electronic device; and the encoded data for the Nth frame of image and the anti-jitter processing policy for the Nth frame of image are stored as the video file for the Nth frame of image. The motion parameter of the electronic device refers to a motion parameter of the electronic device that affects the video recording in the video recording process. The motion parameter may include any motion parameter affecting the video recording, and may, for example, include at least one of: a motion direction parameter, a motion velocity parameter or a motion manner parameter. The parameter data of the motion parameter may be gyroscope data, i.e., the Gyro data.

According to the video processing method provided by the present disclosure, the corresponding number of image data may unnecessarily be cached in a video recording stage, thereby reducing the occupation of a memory of the electronic device. Moreover, the anti-jitter processing is unnecessarily performed on the video to be recorded in the video recording stage, such that the power consumption of the electronic device in the video recording process is reduced, and the heating state of electronic product is reduced.

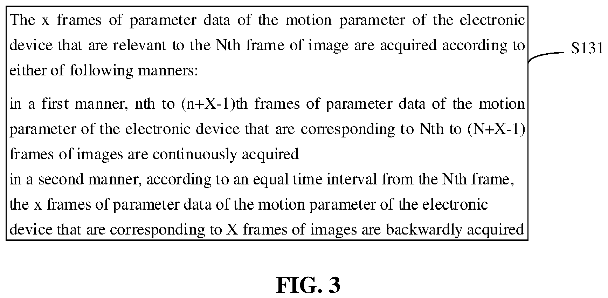

An embodiment of the present disclosure provides a video processing method. FIG. 3 is a method for acquiring x frames of parameter data of a motion parameter of an electronic device that are relevant to an Nth frame according to a preset rule at S13 in FIG. 2.

At S131, the x frames of parameter data of the motion parameter of the electronic device that are relevant to the Nth frame of image are acquired according to either of following manners.

In a first manner, nth to (n+X-1)th frames of parameter data of the motion parameter of the electronic device that are corresponding to Nth to (N+X-1) frames of images are continuously acquired, and the X is a positive integer greater than or equal to 1.

In a second manner, according to an equal time interval from the Nth frame, the x frames of parameter data of the motion parameter of the electronic device that are corresponding to X frames of images are backwardly acquired, and the X is a positive integer greater than or equal to 1.

In the first manner, in order to accurately perform the anti-jitter processing on the Nth frame of image, the nth to (n+X-1)th frames of parameter data of the motion parameter of the electronic device that are corresponding to the Nth to (N+X-1)th frames of images are continuously and backwardly acquired along the time sequence from the Nth frame of image, and the anti-jitter processing policy for the Nth frame of image is determined according to the acquired nth to (n+X-1)th frames of parameter data of the motion parameter of the electronic device. The X is equal to the x, and the nth to (n+X-1)th frames of parameter data of the motion parameter of the electronic device is the x frames of parameter data of the motion parameter of the electronic device.

In the second manner, in order to further reduce the cached data, on the basis of ensuring that the anti-jitter policy for the Nth frame of image can be accurately determined, the x frames of parameter data of the motion parameter of the electronic device that are corresponding to the X frames of images are backwardly acquired along the time sequence according to the equal time interval, and the anti-jitter processing policy for the Nth frame of image is determined according to the acquired X frames of parameter data of the motion parameter of the electronic device.

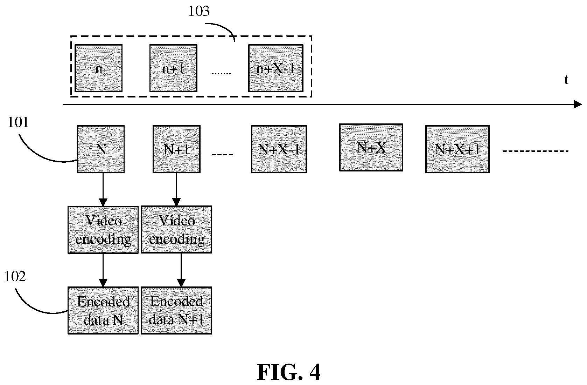

FIG. 4 is an example diagram showing a video processing method according to an exemplary embodiment. The example diagram illustrated in FIG. 4 is the video processing method in the video recording process. In the example illustrated in FIG. 4, the x frames of parameter data of the motion parameter of the electronic device that are relevant to the Nth frame of image are acquired according to the first manner. As illustrated in FIG. 4, whenever image data for one frame of image is acquired, the image data is encoded to obtain encoded data for this frame of image. For example, after the image data 101 for the Nth frame of image is acquired, the image data is subjected to video encoding to obtain the encoded data N for the Nth frame of image, and the encoded data is numbered as 102 in FIG. 4. The image data for the (N+1)th frame of image is acquired, the image data is subjected to the video encoding to obtain the encoded data N+1 for the (N+1)th frame of image, and so on; and each frame of image of the video to be recorded is subjected to the video encoding to obtain the encoded data for each frame of image. In order to accurately perform the anti-jitter processing on each frame of image of the video to be recorded, the x frames of parameter data of the motion parameter of the electronic device that are corresponding to the X frames of images are continuously and backwardly acquired along the time t sequence from the present frame of image. The anti-jitter processing policy for each frame of image is determined according to the acquired corresponding parameter data of the motion parameter. Each frame of encoded data and the anti-jitter processing policy for each frame of image are stored as the video file for each frame of image. For example, after the image data for the Nth frame of image is acquired, the image data for the Nth frame of image is encoded to obtain the encoded data N for the Nth frame of image. In order to accurately perform the anti-jitter processing on the Nth frame of image, the nth to (n+X-1)th frames of data 103 of the motion parameter of the electronic device that are corresponding to the Nth to (N+X-1)th frames of images are continuously and backwardly acquired along the time t sequence from the Nth frame. The anti-jitter processing policy for the Nth frame of image is determined according to the acquired nth to (n+X-1)th frames of data 103 of the motion parameter of the electronic device. The encoded data N for the Nth frame of image and the anti-jitter processing policy for the Nth frame of image are stored as the video file for the Nth frame of image. After the image data for the (N+1)th frame of image is acquired, the image data for the (N+1)th frame of image is encoded to obtain the encoded data N+1 for the (N+1)th frame of image. In order to accurately perform the anti-jitter processing on the (N+1)th frame of image, the (n+1)th to (n+X)th frames of parameter data of the motion parameter of the electronic device that are corresponding to the (N+1)th to (N+X)th frames of images are continuously and backwardly acquired along the time t sequence from the (N+1)th frame. The anti-jitter processing policy for the (N+1)th frame of image is determined according to the acquired (n+1)th to (n+X)th frames of parameter data of the motion parameter of the electronic device. The encoded data N+1 for the (N+1)th frame of image and the anti-jitter processing policy for the (N+1)th frame of image are stored as the video file for the (N+1)th frame of image. By the same reasoning, all video files of the video to be recorded are acquired.

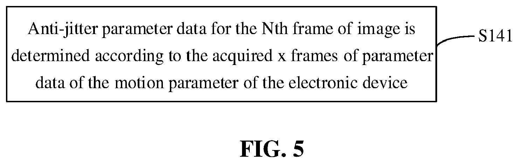

The present disclosure provides a video processing method, as illustrated in FIG. 5. FIG. 5 is a flow chart showing a method for determining an anti-jitter processing policy for an Nth frame of image according to acquired x frames of parameter data of a motion parameter of an electronic device at S14 in FIG. 1. As illustrated in FIG. 5, the processing method is applied to a video recording process. The video processing method may include the following operation.

At S141, anti-jitter parameter data for the Nth frame of image is determined according to the acquired x frames of parameter data of the motion parameter of the electronic device.

In the present disclosure, the anti-jitter parameter data for the Nth frame of image may be determined according to the acquired x frames of parameter data of the motion parameter of the electronic device, such that the anti-jitter processing may be performed on each acquired frame of image of the video according to the anti-jitter parameter data. The anti-jitter parameter data may include any parameter for performing the anti-jitter processing on each frame of image of the video, and may, for example, include the image data for the Nth frame of image, a cutting region, a rotation angle, an image correction parameter, and the like.

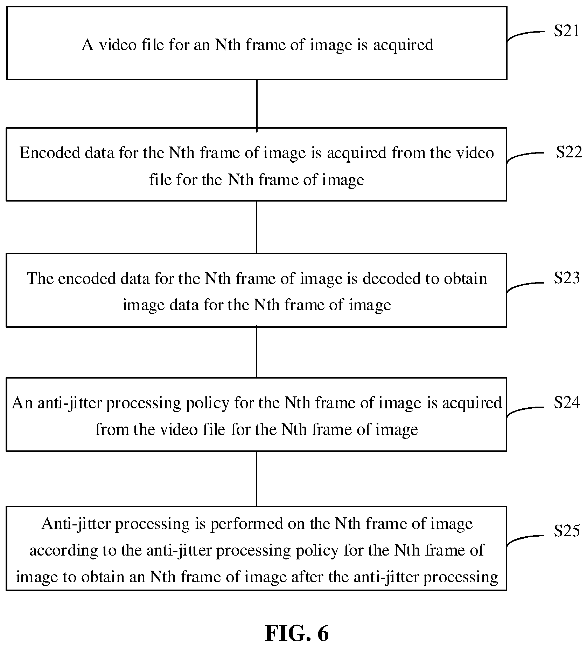

An embodiment of the present disclosure provides a video processing method. The video processing method is applied to an electronic device. FIG. 6 is a flow chart showing a video processing method according to an exemplary embodiment. As illustrated in FIG. 6, the processing method is applied to a video playing process. The video processing method may include the following operations.

At S21, a video file for an Nth frame of image is acquired, and the N is a positive integer greater than or equal to 1.

At S22, encoded data for the Nth frame of image is acquired from the video file for the Nth frame of image.

At S23, the encoded data for the Nth frame of image is decoded to obtain image data for the Nth frame of image.

At S24, an anti-jitter processing policy for the Nth frame of image is acquired from the video file for the Nth frame of image.

At S25, anti-jitter processing is performed on the Nth frame of image according to the anti-jitter processing policy for the Nth frame of image to obtain an Nth frame of image after the anti-jitter processing.

In the video playing process, in the video processing method provided by the present disclosure, the video file for the Nth frame of image is acquired, and the encoded data for the Nth frame of image is acquired from the video file for the Nth frame of image; the encoded data for the Nth frame of image is decoded to obtain the image data for the Nth frame of image; the anti-jitter processing policy for the Nth frame of image is acquired from the video file for the Nth frame of image; and the anti-jitter processing is performed on the Nth frame of image according to the anti-jitter processing policy for the Nth frame of image to obtain the Nth frame of image after the anti-jitter processing. In the video processing method provided by the present disclosure, by providing the video anti-jitter processing in the video playing stage, the anti-jitter processing is unnecessarily performed on each frame of image of the video to be recorded in a video recording stage, such that the power consumption of the electronic device in the video recording process is reduced, and the heating state of electronic product is reduced.

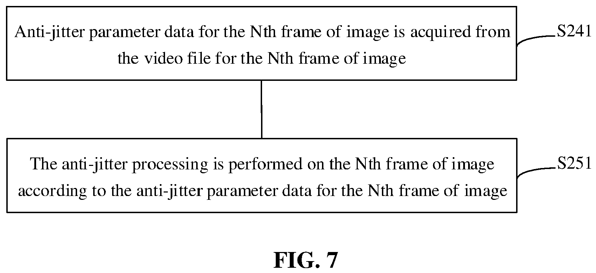

The present disclosure provides a video processing method, as illustrated in FIG. 7. FIG. 7 is a flow chart showing a method for acquiring an anti-jitter processing policy for an Nth frame of image from a video file for the Nth frame of image at S24 in FIG. 6.

At S241, anti-jitter parameter data for the Nth frame of image is acquired from the video file for the Nth frame of image.

In the present disclosure, the anti-jitter parameter data for the Nth frame of image may be acquired from the video file for the Nth frame of image. The anti-jitter parameter data may include any parameter for performing the anti-jitter processing on each frame of image of the video, and may, for example, include the image data for the Nth frame of image, a cutting region, a rotation angle, an image correction parameter, and the like.

FIG. 7 is a flow chart showing a method for performing anti-jitter processing on the Nth frame of image according to the anti-jitter processing policy for the Nth frame of image at S25 in FIG. 6.

At S251, the anti-jitter processing is performed on the Nth frame of image according to the anti-jitter parameter data for the Nth frame of image.

Any manner capable of performing the anti-jitter processing on the Nth frame of image according to the anti-jitter parameter data for the Nth frame of image in the related art may be used, for example, according to the anti-jitter parameter data for the Nth frame of image, the anti-jitter processing may be performed on the Nth frame of image by cutting, rotating and twisting the Nth frame of image and the like.

The Nth frame of image after the anti-jitter processing may be transmitted to a display module for next steps of processing and displaying.

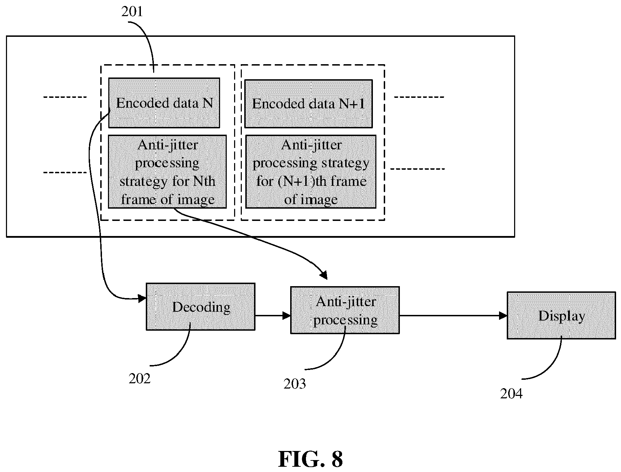

FIG. 8 is an example diagram showing a video processing method according to an exemplary embodiment. The exemplary diagram illustrated in FIG. 8 is the video processing method in a video playing process. In FIG. 8, the encoded data for the Nth frame of image acquired from the video file 201 for the Nth frame of image is decoded 202 to obtain image data for the Nth frame of image. The anti-jitter processing 203 is performed on the Nth frame of image corresponding to the acquired image data for the Nth frame to obtain the Nth frame of image after the anti-jitter processing. Then, the Nth frame of image after the anti-jitter processing may be transmitted to the display module for next steps of processing and displaying. The encoded data for the (N+1)th frame of image acquired from the video file for the (N+1)th frame of image is decoded to obtain image data for the (N+1)th frame of image. The anti-jitter processing is performed on the (N+1)th frame of image according to the acquired image data for the (N+1)th frame to obtain the (N+1)th frame of image after the anti-jitter processing. Then, the (N+1)th frame of image after the anti-jitter processing may be transmitted to the display module for next steps of processing and displaying. By the same reasoning, the decoding, and anti-jitter processing may be completed for the image frames of the video in the video playing stage, and the images after the anti-jitter processing are subsequently processed and displayed, thereby playing the video completely.

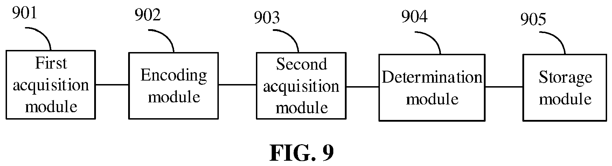

In an exemplary embodiment of the present disclosure, a video processing apparatus is provided. As illustrated in FIG. 9, FIG. 9 is a block diagram of a video processing apparatus according to an exemplary embodiment. Referring to FIG. 9, the apparatus may include a first acquisition module 901, an encoding module 902, a second acquisition module 903, a determination module 904 and a storage module 905.

The first acquisition module 901 is configured to acquire image data for an Nth frame of image of a video to be recorded, and the N is a positive integer greater than or equal to 1.

The encoding module 902 is configured to encode the acquired image data for the Nth frame of image to obtain encoded data for the Nth frame of image.

The second acquisition module 903 is configured to acquire, according to a preset rule, x frames of parameter data of a motion parameter of an electronic device that are relevant to the Nth frame of image, and the x is a positive integer greater than or equal to 1.

The determination module 904 is configured to determine an anti-jitter processing policy for the Nth frame of image according to the acquired x frames of parameter data of the motion parameter of the electronic device.

The storage module 905 is configured to store the encoded data for the Nth frame of image and the anti-jitter processing policy for the Nth frame of image as a video file for the Nth frame of image.

The second acquisition module 903 is configured to acquire, according to either of following manners, the x frames of parameter data of the motion parameter of the electronic device that are relevant to the Nth frame of image.

In a first manner, nth to (n+X-1)th frames of parameter data of the motion parameter of the electronic device that are corresponding to Nth to (N+X-1) frames of images are continuously acquired, and the X is a positive integer greater than or equal to 1.

In a second manner, according to an equal time interval from the Nth frame, the x frames of parameter data of the motion parameter of the electronic device that are corresponding to X frames of images are backwardly acquired, and the X is a positive integer greater than or equal to 1.

The parameter data of the motion relevant parameter of the electronic device include at least one of: parameter data of a motion direction parameter, parameter data of a motion velocity parameter, or parameter data of a motion manner parameter.

The determination module 904 is configured to determine anti-jitter parameter data for the Nth frame of image according to the acquired x frames of parameter data of the motion parameter of the electronic device.

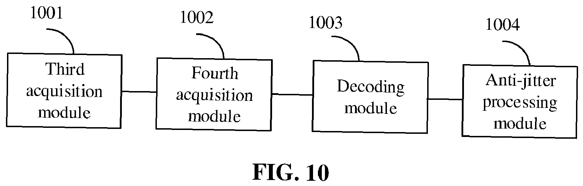

In an exemplary embodiment of the present disclosure, a video processing apparatus is provided. As illustrated in FIG. 10, FIG. 10 is a block diagram of a video processing apparatus according to an exemplary embodiment. The processing apparatus is applied to a video playing process. Referring to FIG. 10, the apparatus may include a third acquisition module 1001, a fourth acquisition module 1002, a decoding module 1003 and an anti-jitter processing module 1004.

The third acquisition module 1001 is configured to acquire a video file for an Nth frame of image, and the N is a positive integer greater than or equal to 1.

The fourth acquisition module 1002 is configured to acquire encoded data for the Nth frame of image from the video file for the Nth frame of image.

The decoding module 1003 is configured to decode the encoded data for the Nth frame of image to obtain image data for the Nth frame of image.

The fourth acquisition module 1002 is configured to acquire an anti-jitter processing policy for the Nth frame of image from the video file for the Nth frame of image.

The anti-jitter processing module 1004 is configured to perform anti-jitter processing on the Nth frame of image according to the anti-jitter processing policy for the Nth frame of image to obtain an Nth frame of image after the anti-jitter processing.

The fourth acquisition module 1002 is configured to acquire anti-jitter parameter data for the Nth frame of image from the video file for the Nth frame of image.

The anti-jitter processing module 1004 is configured to perform the anti-jitter processing on the Nth frame of image according to the anti-jitter parameter data for the Nth frame of image.

For the apparatus in the above embodiments, the specific manner for the operation executed by each module has been described in detail in the embodiments related to the method, and is not repeated herein.

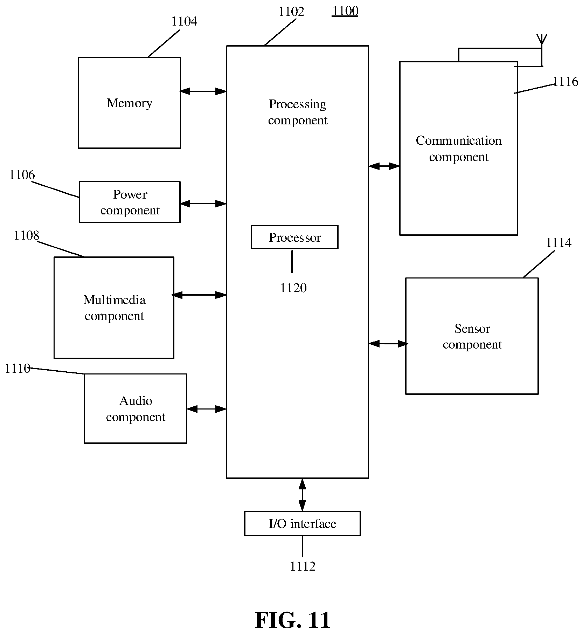

FIG. 11 is a block diagram of a video processing apparatus 1100 according to an exemplary embodiment. For example, the apparatus 1100 may be a mobile phone, a computer, a digital broadcast terminal, a messaging device, a gaming console, a tablet, a medical device, exercise equipment, a personal digital assistant, and the like.

Referring to FIG. 11, the apparatus 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the apparatus 1100, such as the operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate interaction between the processing component 1102 and other components. For instance, the processing component 1102 may include a multimedia module to facilitate interaction between the multimedia component 1108 and the processing component 1102.

The memory 1104 is configured to store various types of data to support the operation of the apparatus 1100. Examples of such data include instructions for any applications or methods operated on the apparatus 1100, contact data, phonebook data, messages, pictures, video, etc. The memory 1104 may be implemented by any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, and a magnetic or optical disk.

The power component 1106 provides power for various components of the apparatus 1100. The power component 1106 may include a power management system, one or more power supplies, and other components associated with generation, management and distribution of power for the apparatus 1100.

The multimedia component 1108 includes a screen providing an output interface between the apparatus 1100 and a user. In some embodiments, the screen may include a liquid crystal display (LCD) and a touch panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also detect a period of time and a pressure associated with the touch or swipe action. In some embodiments, the multimedia component 1108 includes a front camera and/or a rear camera. The front camera and/or the rear camera may receive external multimedia data when the apparatus 1100 is in an operation mode, such as a photographing mode or a video mode. Each of the front camera and the rear camera may be a fixed optical lens system or have focusing and optical zooming capabilities.

The audio component 1110 is configured to output and/or input an audio signal. For example, the audio component 1110 includes a microphone (MIC) configured to receive an external audio signal when the apparatus 1100 is in an operation mode, such as a call mode, a recording mode and a voice recognition mode. The received audio signal may further be stored in the memory 1104 or sent via the communication component 1116. In some embodiments, the audio component 1110 further includes a speaker configured to output the audio signal.

The I/O interface 1112 provides an interface between the processing component 1102 and peripheral interface modules, such as a keyboard, a click wheel, buttons and the like. The buttons may include, but are not limited to, a home button, a volume button, a starting button and a locking button.

The sensor component 1114 includes one or more sensors configured to provide status assessments in various aspects for the apparatus 1100. For instance, the sensor component 1114 may detect an on/off status of the apparatus 1100 and relative positioning of components, such as a display and small keyboard of the apparatus 1100, and the sensor component 1114 may further detect a change in a position of the apparatus 1100 or a component of the apparatus 1100, presence or absence of contact between the user and the apparatus 1100, orientation or acceleration/deceleration of the apparatus 1100 and a change in temperature of the apparatus 1100. The sensor component 1114 may include a proximity sensor configured to detect presence of an object nearby without any physical contact. The sensor component 1114 may also include a light sensor, such as a complementary metal oxide semiconductor (CMOS) or charge coupled device (CCD) image sensor, configured for use in an imaging application. In some embodiments, the sensor component 1114 may also include an acceleration sensor, a gyroscope sensor, a magnetic sensor, a pressure sensor or a temperature sensor.

The communication component 1116 is configured to facilitate wired or wireless communication between the apparatus 1100 and other devices. The apparatus 1100 may access a communication-standard-based wireless network, such as a wireless fidelity (WiFi) network, a 2nd-generation (2G) or 3rd-generation (3G) network or a combination thereof. In an exemplary embodiment, the communication component 1116 receives a broadcast signal or broadcast associated information from an external broadcast management system via a broadcast channel. In an exemplary embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wide band (UWB) technology, a Bluetooth (BT) technology, and other technologies.

In an exemplary embodiment, the apparatus 1100 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, and is configured to execute the above described methods.

In an exemplary embodiment, there is also provided a non-transitory computer-readable storage medium including instructions, such as included in the memory 1104, executable by the processing component 1120 of the apparatus 1100 for performing the above methods. For example, the non-transitory computer-readable storage medium may be a read only memory (ROM), a random access memory (RAM), a compact disc read-only memory (CD-ROM), a magnetic tape, a floppy disc, an optical data storage device, and the like.

A non-transitory computer-readable storage medium is provided, instructions in the storage medium are executed by a processor of a mobile terminal, to cause the mobile terminal to perform the video processing method, which may include: image data for an Nth frame of image of a video to be recorded is acquired, the N being a positive integer greater than or equal to 1; the acquired image data for the Nth frame of image is encoded to obtain encoded data for the Nth frame of image; x frames of parameter data of a motion parameter of an electronic device that are relevant to the Nth frame of image are acquired according to a preset rule, the x being a positive integer greater than or equal to 1; an anti-jitter processing policy for the Nth frame of image is determined according to the acquired x frames of parameter data of the motion parameter of the electronic device; and the encoded data for the Nth frame of image and the anti-jitter processing policy for the Nth frame of image are stored as a video file for the Nth frame of image.

A non-transitory computer-readable storage medium is provided, instructions in the storage medium are executed by a processor of a mobile terminal, to cause the mobile terminal to perform the video processing method, which may include: a video file for an Nth frame of image is acquired, the N being a positive integer greater than or equal to 1; encoded data for the Nth frame of image is acquired from the video file for the Nth frame of image; the encoded data for the Nth frame of image is decoded to obtain image data for the Nth frame of image; an anti-jitter processing policy for the Nth frame of image is acquired from the video file for the Nth frame of image; and anti-jitter processing is performed on the Nth frame of image according to the anti-jitter processing policy for the Nth frame of image to obtain an Nth frame of image after the anti-jitter processing.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art. It is intended that the specification and examples be considered as exemplary only, with the true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof.

It is intended that the scope of the present disclosure only be limited by the appended claims.

## Claims

1. A video processing method for a video recording process, the method being performed by by an electronic device and comprising:
acquiring (S 11) image data for an Nth frame of image of a video to be recorded, the N being a positive integer greater than or equal to 1;
encoding (S12) the acquired image data for the Nth frame of image to obtain encoded data for the Nth frame of image;
acquiring (S13), according to a preset rule, x frames of parameter data of a motion parameter of the electronic device that are relevant to the Nth frame of image, the x being a positive integer greater than or equal to 1;
determining (S 14) an anti-jitter processing policy for the Nth frame of image according to the acquired x frames of parameter data of the motion parameter of the electronic device; and
storing (S15) the encoded data for the Nth frame of image and the anti-jitter processing policy for the Nth frame of image as a video file for the Nth frame of image.

2. The video processing method of claim 1, wherein acquiring, according to either of following manners, the x frames of parameter data of the motion parameter of the electronic device that are relevant to the Nth frame of image:
in a first manner, continuously acquiring nth to (n+X-1)th frames of parameter data of the motion parameter of the electronic device that are corresponding to Nth to (N+X-1) frames of images, the X being a positive integer greater than or equal to 1; and
in a second manner, backwardly acquiring, according to an equal time interval from the Nth frame, the x frames of parameter data of the motion parameter of the electronic device that are corresponding to X frames of images, the X being a positive integer greater than or equal to 1.

3. The video processing method of claim 1, wherein the parameter data of the motion relevant parameter of the electronic device comprise at least one of:
parameter data of a motion direction parameter, parameter data of a motion velocity parameter, or parameter data of a motion manner parameter.

4. The video processing method of claim 1, wherein determining the anti-jitter processing policy for the Nth frame of image according to the acquired x frames of parameter data of the motion parameter of the electronic device comprises:
determining (S141) anti-jitter parameter data for the Nth frame of image according to the acquired x frames of parameter data of the motion parameter of the electronic device.

5. A video processing method for a video playing process, the method being performed by an electronic device, and comprises:
acquiring (S21) a video file for an Nth frame of image, the N being a positive integer greater than or equal to 1;
acquiring (S22) encoded data for the Nth frame of image from the video file for the Nth frame of image;
decoding (S23) the encoded data for the Nth frame of image to obtain image data for the Nth frame of image;
acquiring (S24) an anti-jitter processing policy for the Nth frame of image from the video file for the Nth frame of image; and
performing (S25) anti-jitter processing on the Nth frame of image according to the anti-jitter processing policy for the Nth frame of image to obtain an Nth frame of image after the anti-jitter processing.

6. The video processing method of claim 5, wherein acquiring the anti-jitter processing policy for the Nth frame of image from the video file for the Nth frame of image comprises:
acquiring (S241) anti-jitter parameter data for the Nth frame of image from the video file for the Nth frame of image; and
wherein performing the anti-jitter processing on the Nth frame of image according to the anti-jitter processing policy for the Nth frame of image comprises:
performing (S251) the anti-jitter processing on the Nth frame of image according to the anti-jitter parameter data for the Nth frame of image.

7. A video processing apparatus for performing a video recording process, **characterized in that** the apparatus comprises:
a first acquisition module (901), configured to acquire image data for an Nth frame of image of a video to be recorded, the N being a positive integer greater than or equal to 1;
an encoding module (902), configured to encode the acquired image data for the Nth frame of image to obtain encoded data for the Nth frame of image;
a second acquisition module (903), configured to acquire, according to a preset rule, x frames of parameter data of a motion parameter of an electronic device that are relevant to the Nth frame of image, the x being a positive integer greater than or equal to 1;
a determination module (904), configured to determine an anti-jitter processing policy for the Nth frame of image according to the acquired x frames of parameter data of the motion parameter of the electronic device; and
a storage module (905), configured to store the encoded data for the Nth frame of image and the anti-jitter processing policy for the Nth frame of image as a video file for the Nth frame of image.

8. The video processing apparatus of claim 7, wherein the second acquisition module (903) is configured to acquire, according to either of following manners, the x frames of parameter data of the motion parameter of the electronic device that are relevant to the Nth frame of image:
in a first manner, continuously acquiring nth to (n+X-1)th frames of parameter data of the motion parameter of the electronic device that are corresponding to Nth to (N+X-1) frames of images, the X being a positive integer greater than or equal to 1; and
in a second manner, backwardly acquiring, according to an equal time interval from the Nth frame, the x frames of parameter data of the motion parameter of the electronic device that are corresponding to X frames of images, the X being a positive integer greater than or equal to 1.

9. The video processing apparatus of claim 7, wherein the parameter data of the motion relevant parameter of the electronic device comprise at least one of:
parameter data of a motion direction parameter, parameter data of a motion velocity parameter, or parameter data of a motion manner parameter.

10. The video processing apparatus of claim 7, wherein the determination module (904) is configured to determine anti-jitter parameter data for the Nth frame of image according to the acquired x frames of parameter data of the motion parameter of the electronic device.

11. A video processing apparatus for performing a video playing process, **characterized in that** the apparatus comprises:
a third acquisition module (1001), configured to acquire a video file for an Nth frame of image, the N being a positive integer greater than or equal to 1;
a fourth acquisition module (1002), configured to acquire encoded data for the Nth frame of image from the video file for the Nth frame of image;
a decoding module (1003), configured to decode the encoded data for the Nth frame of image to obtain image data for the Nth frame of image,
wherein the fourth acquisition module (1002) is configured to acquire an anti-jitter processing policy for the Nth frame of image from the video file for the Nth frame of image; and
an anti-jitter processing module (1004), configured to perform anti-jitter processing on the Nth frame of image according to the anti-jitter processing policy for the Nth frame of image to obtain an Nth frame of image after the anti-jitter processing.

12. The video processing apparatus of claim 11, wherein the fourth acquisition module (1002) is configured to acquire anti-jitter parameter data for the Nth frame of image from the video file for the Nth frame of image; and
wherein the anti-jitter processing module (1004) is configured to perform the anti-jitter processing on the Nth frame of image according to the anti-jitter parameter data for the Nth frame of image.

13. A video processing apparatus, comprising:
a processor; and
a memory configured to store instructions executable by the processor;
wherein the processor is configured to perform the video processing method of any one of claims 1 to 4 or to perform the video processing method of any one of claims 5 to 6.

14. A computer-readable storage medium, comprising instructions, wherein the instructions, when executed by a processor of a mobile terminal, cause the mobile terminal to perform the video processing method of any one of claims 1 to 4 or to perform the video processing method of any one of claims 5 to 6.
